(19) Europäisches Patentamt
European Patent Office
Office européen des brevets

(11) EP 1 184 680 B1

(12) **EUROPÄISCHE PATENTSCHRIFT**

(45) Veröffentlichungstag und Bekanntmachung des Hinweises auf die Patenterteilung:
**10.03.2004 Patentblatt 2004/11**

(51) Int Cl.$^7$: **G01S 13/90**

(21) Anmeldenummer: **01111807.2**

(22) Anmeldetag: **16.05.2001**

# (54) Verfahren zur Repositionierung von Bewegtzielen in SAR-Bildern

Method for repositioning of moving targets in SAR-images

Méthode pour repositionner des cibles en mouvement dans des images SAR

(84) Benannte Vertragsstaaten:
**DE FR GB IT NL**

(30) Priorität: **09.08.2000 DE 10038912**

(43) Veröffentlichungstag der Anmeldung:
**06.03.2002 Patentblatt 2002/10**

(73) Patentinhaber: **EADS Deutschland GmbH**
**81663 München (DE)**

(72) Erfinder: **Meyer-Hilberg, Jochen, Dr.-Ing.**
**89275 Elchingen (DE)**

(74) Vertreter: **Meel, Thomas**
**Patentassessor,**
**c/o Dornier GmbH**
**L H G**
**88039 Friedrichshafen (DE)**

(56) Entgegenhaltungen:
**WO-A-00/37965**
**DE-A- 10 012 411**
**US-A- 5 748 143**
**US-A- 5 907 302**

EP 1 184 680 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Repositionierung von Bewegtzielen in SAR-Bildern nach dem Oberbegriff des Patenanspruches 1 (SAR = SYNTHETIC APERTURE/RADAR).

SAR-Bilder sind im Prinzip Range-Doppler-Matrizen, bei denen die Position von Festzielen in Range-Richtung mit Hilfe der Signallaufzeit und die azimutale Position mit Hilfe der Dopplerfrequenz aus ein- oder mehrkanaligen Range/Doppler-Meßdaten bestimmt wird.

Zur Verbesserung der Detektion von bewegten Zielen in SAR-Bildern ist es notwendig, Störungen als auch Signale, welche von feststehenden Zielen stammen, zu unterdrücken. Ein geeignetes Verfahren hierfür ist das Space-Time Adaptive Processing (STAP). Bei den hierzu bekannten Verfahren werden die Radar-Rohdaten in der Regel im Zeitbereich gefiltert (Special Issue on Space-Time Adaptive Processing (STAP), *Electronics & Communication Engineering Journal*, Band 11, 1999, Februar, Nr. 1, ISSN 0954-0695). Hierbei ist jedoch die Bestimmung der Filterkoeffizienten und die Filterung im Zeitbereich sehr rechenaufwendig.

In den nachveröffentlichten Schriften DE 100 12 411 und DE 100 35 530 werden Verfahren vorgestellt, bei welchen die Bestimmung von STAP-Filterkoeffizienten und die STAP-Filterung im Frequenzbereich erfolgen, so daß sich die Anzahl der Rechenoperationen pro Matrixelement auf wenige beschränkt.

Die aus der SAR-Verarbeitung resultierenden Positionen von Zielen in azimutaler Richtung gilt nur für Festziele, da bei Bewegtzielen die gemessene Dopplerfrequenz wegen der Komponente der Fahrzeugbewegung in Range-Richtung verfälscht wird. Deshalb werden Bewegtziele ohne die Durchführung weiterer Signalverarbeitung im SAR-Bild an einer falschen Azimut-Position abgebildet.

Um eine so verfälschte Abbildung zu korrigieren werden üblicherweise mehrkanalige Range/Doppler-Meßdaten herangezogen, um durch die Auswertung der Laufzeitunterschiede in den einzelnen Datenkanälen eine Repositionierung in azimutaler Richtung zu ermöglichen. Hierfür werden in der Regel das wohlbekannte Monopuls-Verfahren oder aber rechenintensive Korrelationsverfahren angewendet, die in der einschlägigen Fachliteratur beschrieben sind.

Aufgabe der Erfindung ist es ein neues und erfinderisches Verfahren zur Repositionierung von Bewegtzielen in SAR-Bildern, die aus mehrkanaligen Range/Doppler- Meßdaten $X$ mit $N_{DZ}$ Dopplerauflösungszellen bestehen, zu finden.

Die Aufgabe wird durch ein Verfahren mit den Merkmalen des Anspruches 1 gelöst. Vorteilhafte Ausgestaltungen und Weiterbildungen des Verfahrens sind in den Unteransprüchen angeführt.

In vorteilhafter Weise ermöglicht das erfindungsgemäße Verfahren die Repositionierung von Bewegtzielen in SAR-Bildern, indem auf Grundlage der in den Frequenzbereich transformierten Filterkoeffizienten $\alpha$ und $\beta$ des STAP, zum einen eine Schar von $N_{DZ}$. Musterfunktionen $M$ festgelegt wird und zum anderen in Kombination mit den mehrkanaligen Range/Doppler-Meßdaten eine Testfunktion $T$ bestimmt wird. Auf dieser Basis wird sodann eine Korrelationsfunktion $K$ generiert, welche der Korrelation der Testfunktion $T$ mit einer ausgewählten Funktion der Schar von Musterfunktionen $M$ entspricht. Nachfolgend kann in erfinderischer Weise die wahre Azimut-Position eines Bewegtzieles auf Grundlage der Position des Maximums dieser Korrelationsfunktion $K$ berechnet werden. Im Sinne des erfindungsgemäßen Verfahrens können beispielsweise diejenigen STAP-Filterkoeffizienten verwendet werden, wie sie mittels der in den nachveröffentlichten Schriften DE 100 12 411 und DE 100 35 530 beschriebenen Verfahren bestimmt werden.

Ein für die Durchführung des erfindungsgemäßen Verfahrens vorteilhaftes Ausführungsbeispiel sei nachfolgend aufgezeigt, wobei zum besseren Verständnis von zweikanaligen Range/Doppler-Meßdaten ausgegangen wird.

Unter dieser Voraussetzung wird die Schar von Musterfunktionen M bezüglich der Range/Doppler-Meßdaten entsprechend

$$M(k,i) = 20 \cdot \log\left( \left| \alpha(i) \cdot \beta(k) - \beta(i) \cdot \alpha(k) \right| + \varepsilon \right) \qquad \text{Gl. 1}$$

festgelegt, wobei gilt $1 \le k \le N_{DZ}$ und $1 \le i \le N_{DZ}$. Um numerische Probleme an der Stelle $k=i$ zu vermeiden, wird ein Wert $\varepsilon$ addiert, welcher vorzugsweise zu $\varepsilon = 10^{-2}$ gewählt wird. Die Musterfunktionen $M$ können auch als Übertragungsfunktionen des STAP-Filters gedeutet werden.

Neben der Festlegung der Musterfunktionen $M$ wird in erfinderischer Weise eine Testfunktion $T$ an der Stelle einer bestimmten Entfernungszelle $\omega$ und für eine bestimmte Dopplerauflösungszelle $\rho$ bestimmt. Dieses Vorgehen wird bei zweikanaligen Range/Doppler-Meßdaten $X_1$ und $X_2$ durch die Gleichung Gl. 2 beschrieben:

$$T(i) = 20 \cdot \log\left( \left| \frac{\alpha(i) \cdot X_1(\omega,\rho) + \beta(i) \cdot X_2(\omega,\rho)}{X_1(\omega,\rho) \cdot X_1^*(\omega,\rho) + X_2(\omega,\rho) \cdot X_2^*(\omega,\rho)} \right| + \varepsilon \right) \qquad \text{Gl. 2}$$

wobei gilt $1 \leq i \leq N_{DZ}$.

Für jedes der zu repositionierenden Ziele wird auf Grundlage der komplexen Meßdaten der ihnen zuzuordnenden Entfernungs- und Dopplerauflösungszelle eine entsprechende Testfunktion berechnet.

Nach der Bestimmung der Schar von Musterfunktionen *M* aus den in den Frequenzbereich transformierten STAP-Filterkoeffizienten und der den Zielen zuzuordnenden Testfunktionen *T* wird basierend auf einer Korrelation der wahre Azimutwinkel, ausgedrückt als "wahre Dopplerfrequenz", d.h. Dopplerindex $\varphi$, der zu repositionierenden Ziele bestimmt. Hierzu wird in vorteilhafter Weise eine Korrelationsfunktion *K* mittels der Korrelation der Testfunktion *T* mit einer einzigen Musterfunktion $M(m)$, welche aus der Schar von $N_{DZ}$ Musterfunktionen *M* ausgewählt wurde, bestimmt. In gewinnbringender Weise wird hierbei diejenige Musterfunktion $M(m)$ ausgewählt, welche der Stelle *m* zuzuordnen ist, für welche die Kreuzkorrelation *r* der ursprünglichen Range/Doppler-Meßdaten *X* maximal ist (entsprechend $|r(m)| \geq |r(i)|$ mit $1 \leq i \leq N_{DZ}$).

Ausgehend von diesen Grundlagen ist es in vorteilhafter Weise möglich die Korrelationsfunktion *K* entsprechend der Gleichung Gl. 3, wie nachfolgend angegeben, zu generieren:

$$K(1...N_{DZ}) = \left| ifft\left\{ fft(T(1...N_{DZ})) \cdot fft(M(m,1...N_{DZ}))^* \right\} \right| \qquad \text{Gl. 3}$$

wobei gilt $1 \leq i \leq N_{DZ}$. "ifft" heißt Inverse Fast-Fourier Transformation und "fft" heißt Fast-Fourier-Transformation.

Entgegen der obigen Vorgehensweise, ist es sehr wohl auch möglich die Testfunktion *T* mit allen Musterfunktion *M* zu korrelieren und sodann im nachhinein diejenige Musterfunktion *M* auszuwählen, welche am besten mit der Testfunktion *T* übereinstimmt. Dieses Vorgehen führt jedoch dazu, daß $N_{DZ}$ Korrelationsfunktionen *K* bestimmt und mit einander verglichen werden müssen.

Die wahre Azimut-Position $\varphi$ läßt sich sodann auf besonders vorteilhafte Weise auf Grundlage der Position *n* des Maximums der Korrelationsfunktion *K*, für weiche gilt $K(n) \geq K(i)$ mit $1 \leq i \leq N_{DZ}$, entsprechend der Gleichung

$$\varphi = (m + n - 1 + N_{DZ} - 1) \bmod N_{DZ} + 1 \qquad \text{Gl. 4}$$

berechnen, wobei "mod" die mathematische Modulo-Funktion darstellt.

Das erfindungsgemäße Verfahren wurde vorstehend exemplarisch anhand der Auswertung von zweikanaligen Meßdaten erläutert, ist aber selbstverständlich nicht darauf beschränkt, sondern kann in analoger Weise mittels der dem Fachmann allgemein bekannter mathematischer Erweiterung auch auf Daten von mehr als zwei Meßkanälen angewandt werden.

Im Rahmen einer Anwendung des erfindungsgemäßen Verfahrens können beispielsweise in vorteilhafter Weise die in Gl. 1 zur Bestimmung der Schar von Musterfunktionen M benötigten Produktterme, bestehend aus den in den Frequenzbereich transformierten Filterkoeffizienten des STAP-Filters, auf Grundlage der Kovarianzmatrix der Filterkoeffizienten und deren Inversen bestimmt werden. In besonders gewinnbringender Weise lassen sich aus diesen beiden Matrizen die Produktterme beispielsweise durch einfache Multiplikation der letzten Zeile der Kovarianzmatrix mit der ersten Spalte ihrer Inversen erzeugen. Dies sei nachfolgend in einfacher Weise und zum direkten Vergleich mit Gl. 1 dargestellt:

$$\text{Kovarianzmatrix:}\; K = \begin{bmatrix} \gamma & \alpha^* \\ \alpha & \beta \end{bmatrix} \rightarrow K^{-1} = \frac{\begin{bmatrix} \beta & -\alpha^* \\ -\alpha & \gamma \end{bmatrix}}{\det} \rightarrow \text{Produktterme:}\; \alpha \cdot \beta - \alpha \cdot \beta$$

Die Bildung von Kovarianzmatrizen und deren Inversen ist dem Fachmann bekannt und soll deshalb an dieser

Stelle nicht weiter ausgeführt werden. Entsprechendes gilt für die Erweiterung der Gleichung zur Bestimmung der Testfunktion *T*, entsprechend Gl. 2, für mehr als zweikanalige Meßdaten *X*.

**Patentansprüche**

1. Verfahren zur Repositionierung von Bewegtzielen in SAR-Bildern, welche aus mehrkanaligen Range/Doppler-Meßdaten *X* mit $N_{DZ}$ Dopplerauflösungszellen bestehen,
**dadurch gekennzeichnet,**
**daß** auf Grundlage der in den Frequenzbereich transformierten Filterkoeffizienten $\alpha$ und $\beta$ des STAP (Space-Time Adaptive Processing) eine Schar von $N_{DZ}$ Musterfunktionen *M* festgelegt wird,
**daß** auf Grundlage der in den Frequenzbereich transformierten Filterkoeffizienten $\alpha$ und $\beta$ des STAP und den mehrkanaligen Range/Doppler-Meßdaten eine Testfunktion·*T* bestimmt wird,
**daß** eine Korrelationsfunktion *K* aus der Korrelation der Testfunktion *T* mit einer ausgewählten Funktion der Schar von Musterfunktionen *M* generiert wird,
und **daß** die wahre Azimut-Position eines Bewegtzieles auf Grundlage der Position des Maximums der Korrelationsfunktion *K* berechnet wird.

2. Verfahren nach Anspruch 1, **dadurch gekennzeichnet, daß** die Schar von Musterfunktionen *M* bei zweikanaligen Range/Doppler-Meßdaten entsprechend der Gleichung

$$M(k,i) = 20 \cdot \log\left( \left| \alpha(i) \cdot \beta(k) - \beta(i) \cdot \alpha(k) \right| + \varepsilon \right)$$

festgelegt wird; wobei gilt $1 \leq k \leq N_{DZ}$ und $1 \leq i \leq N_{DZ}$ und $\varepsilon$ einem Wert von vorzugsweise $10^{-2}$ hat.

3. Verfahren nach einem der Ansprüche 1 bis 2, **dadurch gekennzeichnet, daß** die Testfunktion *T* bei zweikanaligen Range/Doppler-Meßdaten an der Stelle einer bestimmten Entfernungszelle $\omega$ und für eine bestimmte Dopplerauflösungszelle $\rho$ entsprechend der Gleichung

$$T(i) = 20 \cdot \log\left( \left| \frac{\alpha(i) \cdot X_1(\omega,\rho) + \beta(i) \cdot X_2(\omega,\rho)}{X_1(\omega,\rho) \cdot X_1^*(\omega,\rho) + X_2(\omega,\rho) \cdot X_2^*(\omega,\rho)} \right| + \varepsilon \right)$$

bestimmt wird; wobei gilt $1 \leq i \leq N_{DZ}$.

4. Verfahren nach einem der Ansprüche 1 bis 3, **dadurch gekennzeichnet, daß** die Korrelationsfunktion *K* der Korrelation der Testfunktion *T* mit der Auswahl einer einzigen aus den $N_{DZ}$ Musterfunktionen *M* entspricht,
wobei für die Korrelation diejenige Musterfunktion ausgewählt wird, welche der Stelle *m* zuzuordnen ist, für welche die Kreuzkorrelation der Range/Doppler-Meßdaten *r* maximal ist, entsprechend $|r(m)| \geq |r(i)|$ mit $1 \leq i \leq N_{DZ}$,
so daß die Korrelationsfunktion *K* entsprechend der Gleichung

$$K(1 \ldots N_{DZ}) = \left| \mathit{ifft}\left\{ \mathit{fft}\left(T(1 \ldots N_{DZ})\right) \cdot \mathit{fft}\left(M(m, 1 \ldots N_{DZ})\right)^* \right\} \right|$$

generiert wird; wobei gilt $1 \leq i \leq N_{DZ}$.

5. Verfahren nach einem der Ansprüche 1 bis 3, **dadurch gekennzeichnet, daß** die Korrelationsfunktion *K* der Korrelation der Testfunktion *T* mit allen der $N_{DZ}$ Musterfunktionen *M* entspricht,
wobei diejenige Musterfunktion *M* die mit der Testfunktion *T* am besten übereinstimmt, der gesuchten wahren Azimut-Position des Bewegtzieles entspricht.

6. Verfahren nach einem der Ansprüche 1 bis 5, **dadurch gekennzeichnet, daß** die wahre Azimut-Position $\varphi$ auf Grundlage der Position *n* des Maximums der Korrelationsfunktion *K*, für welche gilt $K(n) \geq K(i)$ mit $1 \leq 1 \leq N_{DZ}$, entsprechend der Gleichung $\varphi = (m + n - 1 + N_{DZ} - 1) \bmod N_{DZ} + 1$ berechnet wird.

7. Verfahren nach einem der vorhergehenden Ansprüche, **dadurch gekennzeichnet, daß** die zur Bestimmung der Schar von Musterfunktionen *M* benötigten Produktterme, bestehend aus den in den Frequenzbereich transformierten Filterkoeffizienten des STAP-Filters, auf Grundlage der Kovarianzmatrix der Filterkoeffizienten und deren Inversen bestimmt werden.

8. Verfahren nach Anspruch 7, **dadurch gekennzeichnet, daß** die Produktterme durch Multiplikation der letzten Zeile der Kovarianzmatrix mit der ersten Spalte ihrer Inversen bestimmt werden.

## Claims

1. Method for repositioning of moving targets in SAR images, which comprise multichannel range/Doppler measurement data $X$ with $N_{DZ}$ Doppler resolution cells,
**characterized**
**in that** a family of $N_{DZ}$ pattern functions $M$ is defined on the basis of the filter coefficients $\alpha$ and $\beta$, transformed to the frequency domain, of the STAP (space-time adaptive processing),
**in that** a test function $T$ is determined on the basis of the filter coefficients $\alpha$ and $\beta$, transformed to the frequency domain, of the STAP and the multichannel range/Doppler measurement data,
**in that** a correlation function $K$ is generated from the correlation of the test function $T$ with a selected function from the family of pattern functions $M$,
and **in that** the true azimuth position of a moving target is calculated on the basis of the position of the maximum of the correlation function $K$.

2. Method according to Claim 1, **characterized in that** the family of pattern functions $M$ for two-channel range/Doppler measurement data is defined on the basis of the equation $M(k,i)=20\cdot\log(/\alpha(i)\cdot\beta(k)-\beta(i)\cdot\alpha(k)/+\varepsilon)$; with $1\leq k\leq N_{DZ}$, $1\leq i\leq N_{DZ}$ and $\varepsilon$ preferably having a value of $10^{-2}$.

3. Method according to one of Claims 1 or 2, **characterized in that** the test function $T$ for two-channel range/Doppler measurement data is determined at the location of a specific range cell $\omega$ and for a specific Doppler resolution cell $\rho$ in accordance with the equation

$$T(i)=20\cdot\log\left(\left|\frac{\alpha(i)\cdot X_1(\omega,\rho)+\beta(i)\cdot X_2(\omega,\rho)}{X_1(\omega,\rho)\cdot X_1(\omega,\rho)+X_2(\omega,\rho)\cdot X_2(\omega,\rho)}\right|+\varepsilon\right);$$

where $1\leq i\leq N_{DZ}$.

4. Method according to one of Claims 1 to 3, **characterized in that** the correlation function $K$ corresponds to the correlation of the test function $T$ with the selection of a single function from the $N_{DZ}$ pattern functions $M$,
with the pattern function which is selected for the correlation being that which can be associated with the location m for which the cross-correlation of the range/Doppler measurement data $r$ is a maximum, corresponding to $|r(m)| \geq |r(i)|$ where $1\leq i\leq N_{DZ}$,
so that the correlation function $K$ is generated in accordance with the equation

$$K(1...N_{DZ}) = |ifft\,\{fft(T(1...N_{DZ}))\cdot fft(M(m,1...N_{DZ}))\}|;$$

where $1\leq i\leq N_{DZ}$.

5. Method according to one of Claims 1 to 3, **characterized in that** the correlation function $K$ corresponds to the correlation of the test function $T$ with all of the $N_{DZ}$ pattern functions $M$,
with the pattern function $M$ which provides the best match with the test function $T$ being that which corresponds to the sought true azimuth position of the moving target.

6. Method according to one of Claims 1 to 5, **characterized in that** the true azimuth position $\varphi$ is calculated on the basis of the position $n$ of the maximum of the correlation function $K$ for which $K(n)\geq K(i)$ where $1\leq i\leq N_{DZ}$ in accordance

with the equation $\varphi=(m+n-1+N_{DZ}-1)\ \mathrm{mod} N_{DZ}+1$.

7. Method according to one of the preceding claims, **characterized in that** the product terms which are required for determination of the family of pattern functions *M*, comprising the filter coefficients, transformed to the frequency domain, of the STAP filter, are determined on the basis of the covariance matrix of the filter coefficients and their inverses.

8. Method according to Claim 7, **characterized in that** the product terms are determined by multiplication of the last row in the covariance matrix by the first column of its inverses.

**Revendications**

1. Méthode pour repositionner des cibles en mouvement dans des images SAR, lesquelles se composent de données de mesure multicanaux X de distance/doppler avec $N_{DZ}$ cellules de résolution doppler, **caractérisée en ce qu'**un système de $N_{DZ}$ fonctions modèles M est défini sur la base des coefficients de filtrage $\alpha$ et $\beta$ du STAP (Space-Time Adaptive Processing) transformés dans la plage de fréquences,
**qu'**une fonction de test T est déterminée sur la base des coefficients de filtrage $\alpha$ et $\beta$ du STAP transformés dans la plage de fréquences et des données de mesure multicanaux de distance/doppler, qu'un facteur de corrélation K est généré à partir de la corrélation de la fonction de test T avec une fonction choisie du système de fonctions modèles M,
et **que** la position azimutale réelle d'une cible en mouvement est calculée sur la base de la position du maximum de la fonction de corrélation K.

2. Méthode selon la revendication 1, **caractérisée en ce que** le système de fonctions modèles M, dans le cas de données de mesure de distance/doppler sur deux canaux, est déterminé d'après l'équation $M(k,i) = 20.\log(|\alpha(i).\beta(k) - \beta(i).\alpha(k)|+\varepsilon)$ ; où $1 \le k \le N_{DZ}$ et $1 \le i \le N_{DZ}$ et $\varepsilon$ ayant de préférence une valeur de $10^{-2}$.

3. Méthode selon l'une des revendications 1 à 2, **caractérisée en ce que** la fonction de test T, dans le cas de données de mesure de distance/doppler sur deux canaux, à l'endroit d'une cellule de distance $\omega$ donnée et pour une cellule de résolution doppler $\rho$ donnée est déterminée d'après l'équation

$$T(i) = 20.\log\left(\left|\frac{\alpha(i).X_1(\omega,\rho)+\beta(i).X_2(\omega,\rho)}{X_1(\omega,\rho).X_1^*(\omega,\rho)+X_2(\omega,\rho).X_2^*(\omega,\rho)}\right|+\varepsilon\right)\ ;\ \text{où}\ 1 \le i \le N_{DZ}.$$

4. Méthode selon l'une des revendications 1 à 3, **caractérisée en ce que** la fonction de corrélation K correspond à la corrélation de la fonction de test T avec la sélection d'une seule parmi les $N_{DZ}$ fonctions modèles M,
la fonction modèle choisie pour la corrélation étant celle à qui doit être associé l'endroit m pour lequel la corrélation croisée des données de mesure de distance/doppler r est au maximum selon $|r(m)| \ge |r(i)|$ avec $1 \le i \le N_{DZ}$,
de manière à ce que la fonction de corrélation K soit générée d'après l'équation $K(1...N_{DZ})=|\mathrm{ifft}\{\mathrm{fft}(T(1...N_{DZ})).\mathrm{fft}(M(m,1...N_{DZ}))^*\}|$, où $1 \le i \le N_{DZ}$.

5. Méthode selon l'une des revendications 1 à 3, **caractérisée en ce que** la fonction de corrélation K correspond à la corrélation de la fonction de test T avec la totalité des $N_{DZ}$ fonctions modèles M,
la fonction modèle M qui coïncide le mieux avec la fonction de test T correspondant à la position azimutale réelle recherchée de la cible en mouvement.

6. Méthode selon l'une des revendications 1 à 5, **caractérisée en ce que** la position azimutale réelle $\varphi$ est calculée sur la base de la position n du maximum de la fonction de corrélation K, pour laquelle $K(n) \ge K(i)$ avec $1 \le i \le N_{DZ}$, d'après l'équation $\varphi = (m+n-1+N_{DZ}-1)\ \mathrm{mod}\ N_{DZ}+1$.

7. Méthode selon l'une des revendications précédentes, **caractérisée en ce que** les termes du produit nécessaires pour déterminer le système de fonctions modèles M, composés des coefficients de filtrage du filtre STAP transformés dans la plage de fréquences, sont déterminés sur la base de la matrice de covariance des coefficients de filtrage et de son inverse.

**8.** Méthode selon la revendication 7, **caractérisée en ce que** les termes du produit sont déterminés en multipliant la dernière ligne de la matrice de covariance avec la première colonne de son inverse.